# EUROPEAN PATENT APPLICATION

(11) **EP 1 168 560 A2**
(43) Date of publication of application: **02.01.2002**
(21) Application number: 01113855.9
(22) Date of filing: 07.06.2001
(51) Int. Cl.: H02H 9/02

(54) **High electrical power current limiter being useful in electrical power system**

(30) Priority: 19.06.2000 DK 200000951
(71) Applicant: Haldor Topsoe A/S, 2800 Kgs. Lyngby (DK)
(72) Inventor: Christiansen, Jens, 2800 Kgs Lyngby (DK); Larsen, Jorgen Gutzon, 2880 Bagsvaerd (DK)

(57) **Abstract**

A high electrical power current limiter comprising a high temperature superconducting sacrificial fuse in series with superconductive or normalconductive equipment to be protected, wherein the high temperature superconducting fuse has a critical current density being lower than a fault current.

## Description

The present invention concerns a fault current limiter device being provided with superconductor plates or rods for application in high power systems with a usual operation current between 100 ampere and 10.000 ampere. The fault current limiter will restrict the current, when a short-circuit current occurs in the electric power network.

The invention is based on the observed fact that high temperature superconductors (HTSCs) rapidly gain resistance when electrical current exceeds the critical current of the superconductor. High temperature superconductors include REBa₂Cu₃O₇₋ₓ (RE include Y, La, Nd, Sm, Eu, Gd, Dy, Ho, Er, Tm, Yb and Lu; hereafter referred to as RBCO123 superconductor), (Bi, Pb)₂Sr₂Ca₂Cu₃O₁₀₋ₓ and Bi₂Sr₂CaCu₂O₈₋ₓ. HTSCs are not completely homogenous with respect to the critical current density and some parts of the superconductor will start to be transformed into the normal conducting state with a relatively high resistance, whereby a hot spot will be formed and immediately result in a destructive rupture of the HTSC. This rupture occurs within some milliseconds if the applied current is high enough and this property is generally regarded as a serious problem for the application of an HTSC. Rupture of the HTSC is by the present invention utilised to limit fault currents in high power systems.

Rods of HTSC being applicable in the invention are available from various suppliers including Haldor Topsøe A/S.

In a specific embodiment of the invention a fault current limitation unit consists of a short HTSC bar with two electrically conducting terminals connected to flexible cables. The bar is preferably of a length between 5 cm and 100 cm.

The terminals are positioned in a tubular support of electrically insulating material.

Narrow zones with specified low critical current densities can be created by various methods, so that controlled flash arcs are formed along the superconductor limiter, when a fault current occurs. A thermally and mechanically stabilising metal sheath may cover the superconductor except in the areas where the flash arcs.

The geometry of the terminals fit into a tubular support in such a way that the superconductor and the connected terminals glide into the tubular support with no play. The terminals are connected to highly flexible cables so that the terminals can move freely. None or just one of the terminals is fixed to the tubular support. The space between the superconductor bar and the tubular support may be filled with electrically insulating particles such as quartz sand. Further, a cooling agent, such as liquid nitrogen or nitrogen gas may be situated inside the tubular support. Upon fracture of the superconductor plate, one or both terminals will be expelled from the support by the force of an external spring. A repulsive force may also be provided by volume expansion inside the tubular support due to the heating from electric flash arc inside the tube. Upon fracture of the superconductor bar, one or both terminals will then be expelled from the support. A third method includes an electrically insulating spring between the two terminals, securing repulsive forces between the terminals as fracture of the superconductor occurs.

Explosive material may be situated on the superconductor. The explosion will be triggered by the electric flash arc formed when the superconductor transforms into the normal conductive state due to a short circuit current exceeding the critical current of the superconductor.

The invention also includes an electrical power device with one or more superconductor fuses in series or parallel. In addition, one or more resistive or inductive shunts may also be connected in parallel with the fuses. The fuse will rupture when a fault current exceeds the critical current of the superconductor. The fracture will instantly increase the resistance over the superconductor and the fault current will be transferred to the shunt, where the ohm resistance will limit the current. The distance between the two fractured parts of the fuse can be further separated by several methods as described above. An electrical flash arc may occur upon fracture of the fuse. An applied magnetic field or a forced non-explosive gas may be utilised to remove the flash arc from the fracture of the superconductor.

The fault current limiter will typically operate as described below: The normal current will mainly flow via the superconductor. The superconductor will break immediately as a fault current occurs and the electrical connection has terminated. Thus, the current is redirected to the shunt. A switch system will disconnect the superconductor fuse. When the fault current is removed by an external action, the switch system will connect a second superconductor fuse in parallel with the shunt. The first fuse can then manually be replaced. Additional fuses and switches may be added to the system allowing the system to repeat the fault current procedure within a second.

### Example 1

One superconductor fuse, which consists of a HTSC with two copper terminals connected to highly flexible cables, is connected in parallel with a shunt. As the fault current exceeds the critical current in defined zones of the superconductor the fuse breaks. The fault current is transferred to the shunt and thus is restricted. A switch system disconnects the superconductor fuse. When the fault current is eliminated by an external action, a switch system will connect a second superconductor fuse in parallel with the shunt. The first fuse is now replaced manually.

### Example 2

The fuse from Example 1 is positioned in a tubular support, which allow the connected terminals to glide without rotation in the support. One of the terminals is fixed to the tube by the use of screws. An electrically insulating spring is situated between the two terminals, securing repulsive forces between the terminals. Upon fracture of the superconductor bar, one of the terminals will be expelled from the tube.

### Example 3

In a procedure similar to Example 2 with the exception that the repulsive force between the terminals is applied with external forces.

### Example 4

In a procedure similar to Example 2 with the exception that an explosion of explosive material applies the repulsive force between the terminals. The material is situated in the space between the tubular support and the superconductor. This material will detonate as an electric arc occurs inside the support.

### Example 5

In a procedure similar to Example 2 with the exception that the repulsive force between the terminals is applied by volume expansion of liquid or gas as electric arc occurs inside the support.

### Example 6

In a procedure similar to Examples 1-5 with the exception that the space between the superconductor bar and the tubular support is filled with a flash inhibitor.

### Example 7

In a procedure similar to Examples 1-6 with the exception that the critical current of the HTSC is lowered in several (2 to 10) narrow zones of 1 to 10 mm across the HTSC in order to control the flash arc.

### Example 8

In a procedure similar to Examples 1-7 with the exception that the superconductor is covered by a metal sheath for thermal and mechanical stabilisation except in the areas where the flash arcs will form - either due to the lack of metal sheath stabilisation or because the unsheathed parts of the HTSC has relatively low critical current densities.

## Claims

1. A high electrical power current limiter comprising a high temperature superconducting sacrificial fuse in series with superconductive or normalconductive equipment to be protected, wherein the high temperature superconducting fuse has a critical current density being lower than a fault current.

2. The high electrical power current limiter of claim 1, wherein the superconducting fuse is provided with a number of zones having lower levels of critical currents and/or lower mechanical strength.

3. The high electrical power current limiter of claim 1, wherein one terminal of the fuse is fixed in a supporting tube into which and the opposite terminal is moveably mounted in the tube, the opposite terminal of the fuse being connected to a spring.

4. The high electrical power current limiter of claim 1, comprising additionally a supporting tube surrounding at least part of the fuse and adapted to hold a coolant, so that the coolant creates a pressure when a flash arc occurs in the fuse and expels the at least part of the high electrical power current limiter.

5. The high electrical power current limiter of claim 1 further provided with an explosive charge mounted to the fuse, adapted to detonate when a flash arc forms.

6. The high electrical power current limiter according to anyone of the preceding claims being provided a shunt in parallel with the fuse alone or in parallel with the fuse and the equipment to be protected to prohibit or extinct a flash arc and to admit a part of a fault current to pass through with a reduced current.
